Europäisches Patentamt

European Patent Office

Office européen des brevets

(19)

(11) EP 1 605 694 A1

(12) EUROPEAN PATENT APPLICATION
published in accordance with Art. 158(3) EPC

(43) Date of publication:
14.12.2005 Bulletin 2005/50

(51) Int Cl.⁷: H04N 5/907, H04N 5/91

(21) Application number: 03816259.0

(22) Date of filing: 28.11.2003

(86) International application number:
PCT/JP2003/015206

(87) International publication number:
WO 2004/082270 (23.09.2004 Gazette 2004/39)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 12.03.2003 JP 2003066456
25.04.2003 JP 2003121178

(71) Applicant: MATSUSHITA ELECTRIC INDUSTRIAL
CO., LTD.
Kadoma-shi, Osaka 571-8501 (JP)

(72) Inventors:
• OHTSUKA, Takeshi
Nishinomiya-shi, Hyogo 662-0018 (JP)

• OKAMOTO, Keishi
Katano-shi, Osaka 576-0011 (JP)
• SAKANIWA, Katsuyuki
Takarazuka-shi, Hyogo 665-0887 (JP)
• OKUDA, Nobukatsu
Neyagawa-shi, Osaka 572-0076 (JP)
• KUNISUE, Katsuji
Higashiosaka-shi, Osaka 578-0934 (JP)

(74) Representative: Schmidt, Josef Heinrich
European Patent Attorney,
Vossius & Partner,
Siebertstr. 4
81675 München (DE)

(54) CAMERA RECORDER AND DATA RECORDING MEDIUM

(57) A camera recorder that is capable of recording and reproducing a large volume of image data at a high speed and a data recording medium that can be used for the camera recorder are provided. The camera recorder includes a camera portion 1 and a recording portion 2 for recording image data picked up by the camera portion 1. The recording portion 2 includes an interface portion 3 for receiving the image data from the camera portion 1, a plurality of memory cards 50 to 53 for storing the image data, and a controlling portion 4 for controlling writing of the image data to the memory cards 50 to 53. The memory cards 50 to 53 are constituted by a flash memory, and the controlling portion 4 divides the image data received from the camera portion 1 via the interface portion 3 into blocks having a data size that is an integral multiple of a recording block of the flash memory, and records the image data to the memory cards 50 to 53 in parallel.

FIG.1

**Description**

Technical Field

The present invention relates to data recording media that are configured using memory cards and camera recorders using the same.

Background Art

Memory cards, which are card-type recording media such as SD cards that contain a flash memory, are very small and thin and convenient to handle, so that memory cards are used widely in digital devices such as digital still cameras.

However, memory cards that are currently commercially available have a maximum recording capacity of 512 MB and a maximum recording rate of 10 MB/sec. When video signals are to be recorded in such a memory card for a long period of time, the recording capacity is insufficient. For example, in order to record video signals and sound signals for DV (digital video), a band of about 4 MB/sec is required, and a 512 MB memory card can store only about two minutes of signals.

In JP 2002-189992A (pages 3 to 5, FIG. 1), there is disclosed a technique that enables recording of a large volume of information with one memory card drive by providing a plurality of memory card mounting portions on a memory card drive body having an external interface and mounting a plurality of memory cards on these mounting portions.

Moreover, JP 2000-207137A (pages 3 to 6, FIG. 1) discloses that a disk system having a desired capacity is configured by combining semiconductor disks that are available, in accordance with the intended use.

However, in conventional memory card drives, although the recording capacity is increased by putting a plurality of memory cards together into one pack, the transfer rate is not increased, so that high-resolution video signals having a recording rate of more than 10 MB/sec cannot be recorded.

Furthermore, image data recorded in the memory card drive cannot be uploaded to a PC at a high speed, so that the time needed to upload the data to the PC increases in proportion to the increase in the volume of the data.

Disclosure of Invention

The present invention is achieved in order to solve the foregoing problem, and it is an object of the present invention to provide a camera recorder that is capable of recording and reproducing a large volume of image data at a high speed, and a data recording medium that can be used for the camera recorder.

In order to solve the problem, a first camera recorder according to the present invention is a camera recorder including a camera portion and a recording portion for recording image data picked up by the camera portion. The recording portion includes an interface portion for receiving the image data from the camera portion, a plurality of memory cards for storing the image data, and a controlling portion for controlling writing of the image data to the memory cards, wherein the memory cards are constituted by a flash memory, and wherein the controlling portion divides the image data received from the camera portion via the interface portion into blocks having a data size that is an integral multiple of a recording block of the flash memory, and records the image data to the plurality of memory cards in parallel.

Moreover, a second camera recorder according to the present invention is a camera recorder including a camera portion and a recording portion for recording image data picked up by the camera portion. The recording portion includes an interface portion for receiving the image data from the camera portion, a plurality of memory cards for storing the image data, and a controlling portion for controlling reading of the image data from the memory cards, wherein the memory cards are constituted by a flash memory, and wherein the controlling portion reads the image data that is divided into blocks having a data size that is an integral multiple of a recording block of the flash memory from the plurality of memory cards, in parallel.

Moreover, a data recording medium according to the present invention includes an interface portion for receiving image data, a plurality of memory cards for storing the image data, and a controlling portion for controlling writing of the image data to the memory cards, wherein the memory cards are constituted by a flash memory, and wherein the controlling portion divides the image data received via the interface portion into blocks having a data size that is an integral multiple of a recording block of the flash memory, and records the image data to the plurality of memory cards in parallel.

With the present invention, a camera recorder that is capable of recording and reproducing a large volume of image data at a high speed and a data recording medium that is capable of, for example, transferring the image data at a high speed to an information processing device such as a personal computer can be provided.

Brief Description of Drawings

FIG. 1 is a block diagram of a camera recorder in an embodiment of the present invention.

FIG. 2 is a detailed block diagram of a recording portion in FIG. 1.

FIG. 3 is a timing chart of data input and output of a controlling portion.

FIG. 4 is an explanatory diagram of an example of a conversion table in an address conversion portion.

FIG. 5 is a conceptual diagram of a camera recorder having a plurality of recording portions.

FIG. 6 is an explanatory diagram of a writing operation in a memory card.

FIG. 7 is a conceptual diagram showing an example of a configuration of a memory card in an embodiment of the present invention.

FIG. 8 is a conceptual diagram showing another example of a data recording procedure in an embodiment of the present invention.

Best Mode for Carrying Out the Invention

According to the above-described first camera recorder of the present invention, it is possible to realize a recording rate proportional to the number of memory cards to which the image data are written in parallel, and thus the image data can be recorded at a high speed.

Moreover, when the first camera recorder is configured such that the image data received from the camera portion via the interface portion is divided into blocks having a data size that is an integral multiple of a recording block of the flash memory and recorded to the plurality of memory cards in parallel, an increase in the number of rewritings can be prevented.

Moreover, when the first camera recorder is configured such that the image data received from the camera portion via the interface portion is divided into blocks having a data size that is an integral multiple of an erasure block of the flash memory and recorded to the plurality of memory cards in parallel, an increase in the number of erasings due to the use of a plurality of memory cards can be prevented, and thus recording can be performed at a high speed.

Furthermore, in the first camera recorder, it is also preferable that data is transferred from the camera portion to the interface portion in units of blocks having a size that is an integral multiple of (the data size of the erasure block of the flash memory) x (the number of memory cards constituting the recording portion), and that the controlling portion records the data to the plurality of memory cards in units of the recording block of the flash memory. The reason for this is that the data can be transferred in small blocks at a high speed during reading.

Moreover, in the first camera recorder, it is also preferable that the controlling portion stripes the image data that is divided into blocks across the plurality of memory cards to record the image data.

Moreover, in the first camera recorder, it is also preferable that the camera recorder includes a plurality of units of the recording portion. The reason for this is that the image data can be recorded for a longer period of time.

Moreover, in the first camera recorder, it is also preferable that the recording portion is removable. Furthermore, it is also preferable that the recording portion is in the form of a card or a stick that is compatible with an external information processing device. The reason for this is that the image data can be edited on the information processing device such as a personal computer.

Moreover, according to the above-described second camera recorder of the present invention, the controlling portion reads the image data that is divided into blocks having a data size that is an integral multiple of a recording block of the flash memory from the plurality of memory cards, in parallel, and thus, video signals that require a high rate can be reproduced.

Furthermore, in the second camera recorder, it is also preferable that the camera recorder includes a plurality of units of the recording portion. The reason for this is that the image data can be reproduced for a longer period of time. Moreover, in the second camera recorder, it is also preferable that the recording portion is removable. Furthermore, it is also preferable that the recording portion is in the form of a card or a stick that is compatible with an external information processing device. The reason for this is that the image data can be edited on the information processing device such as a personal computer.

Moreover, according to the data recording medium of the present invention, the controlling portion divides the image data received via the interface portion into blocks having a data size that is an integral multiple of a recording block of the flash memory, and records the image data to the plurality of memory cards in parallel. Thus, it is possible to realize a recording rate proportional to the number of memory cards to which the image data are written in parallel, so that the image data can be recorded at a high speed.

Moreover, when the data recording medium of the present invention is configured such that the image data received via the interface portion is divided into blocks having a data size that is an integral multiple of an erasure block of the flash memory and recorded to the memory cards in parallel, an increase in the number of erasings due to the use of a plurality of memory cards can be prevented, and thus recording can be performed at a high speed.

Furthermore, in the data recording medium of the present invention, it is also preferable that the interface portion receives data in units of blocks having a size that is an integral multiple of (the data size of the erasure block of the flash memory) x (the number of memory cards constituting the recording portion), and the controlling portion records the data to the plurality of memory cards in units of the recording block of the flash memory. The reason for this is that the data can be transferred in small blocks at a high speed during reading.

Moreover, in the data recording medium of the present invention, it is also preferable that the controlling portion stripes the image data that is divided into blocks across the plurality of memory cards to record the image data. Moreover, it is also preferable that the data recording medium of the present invention is in the form of a card or a stick that is compatible with a plurality of types of information processing devices. The reason for this is that, for example, after recording of image data picked up by a camera recorder to which the data recording medium is attached, the image data can be edited on the information processing devices such as a personal computer.

Hereinafter, embodiments of the present invention will be described more specifically with reference to the drawings.

(Embodiment 1)

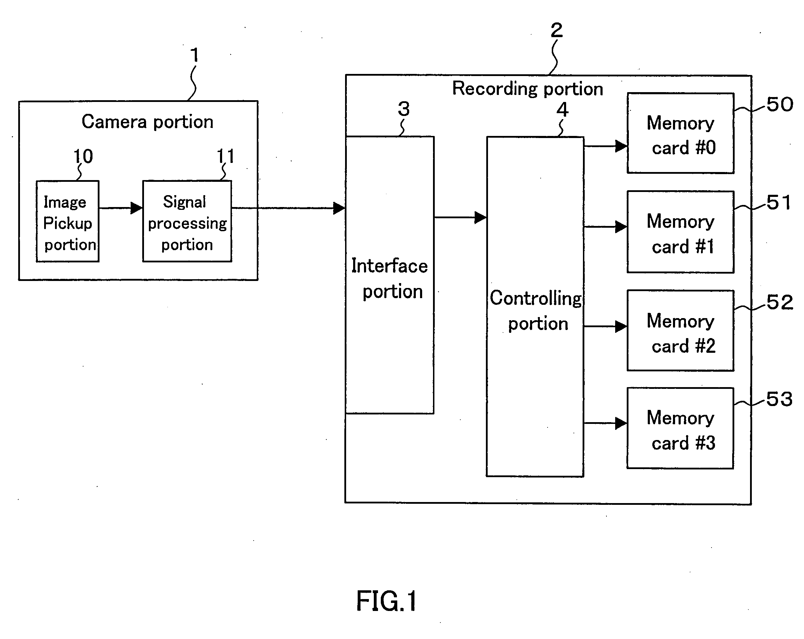

FIG. 1 shows a configuration of a camera recorder according to an embodiment of the present invention. In FIG. 1, numeral 1 indicates a camera portion, and numeral 2 indicates a recording portion for recording image data that is transferred from the camera portion. The camera portion 1 includes an image pickup portion 10 and a signal processing portion 11 for digitizing video signals received from the image pickup portion 10 and dividing them into blocks of 64 KB. The recording portion 2 includes an interface portion 3 that serves as an interface when the image data is received from the camera portion 1, four memory cards 50, 51, 52, and 53, and a controlling portion 4 for transmitting the digital data to these four memory cards 50 to 53 and operating them in parallel. The memory cards 50 to 53 are provided with a memory card number such as "memory card #0", "memory card #1", "memory card #2", or "memory card #3". Moreover, each of the memory cards 50 to 53 has a recording capacity of 512 MB, and provides a recording rate of 4 MB/sec when 16 KB blocks are transferred consecutively.

Operations of the camera recorder having the above-described configuration will be described in detail, beginning with the recording operation.

The video signals picked up by the image pickup portion 10 are input to the signal processing portion 11. The signal processing portion 11 performs data compression on the video signals that were input, divides them into blocks of 64 KB, and then outputs them. When, for example, this camera recorder conforms to the DVCPRO50 standard, the signal input portion 11 compresses image data having a rate of about 25 MB/sec to a rate of 9 MB/sec.

The image data that was divided into blocks of 64 KB by the signal processing portion 11 is input to the controlling portion 4 via the interface portion 3. The controlling portion 4 records the image data received from the interface portion 3 to the four memory cards 50 to 53 simultaneously in parallel, in units of blocks of 16 KB.

When data having a size of 16 KB is recorded consecutively, the recording rate of the memory cards 50 to 53 is 4 MB/sec, and the data is recorded in units of blocks of 16 KB to each of the four of the memory cards 50 to 53 simultaneously, so that the allowable maximum transfer rate for transferring the image data to the interface portion 3 is 16 MB/sec. Thus, a recording rate that is four times as high as that of a single memory card can be achieved.

Next, operations of the memory cards 50 to 53 will be described. First, the recording operation of a commonly used memory card will be described.

In general, a flash memory that is contained in a memory card is constituted by a plurality of erasure blocks, and when data is erased, the erasing operation is performed with respect to each erasure block. The erasure block includes a plurality of recording blocks, and writing to an erasure block that has been erased can be performed in units of single recording blocks.

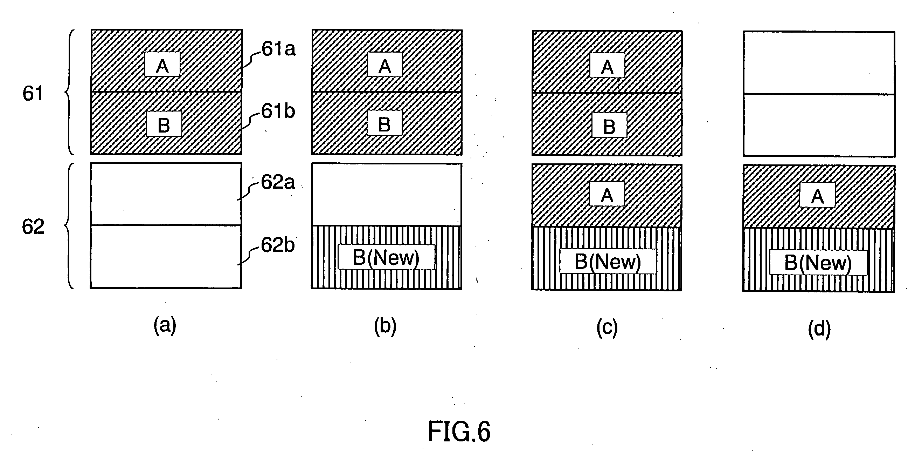

For example, in the case of a flash memory in which one erasure block is constituted by two recording blocks of 512 bytes, wherein data is once written in the two recording blocks that constitute the erasure block, an algorithm for rewriting only the data in one of the two recording blocks will be described with reference to FIGS. 6(a) to 6(c).

In FIG. 6(a), numerals 61 and 62 indicate erasure blocks. The erasure block 61 is constituted by two recording blocks 61a and 61b, and the erasure block 62 is constituted by two recording blocks 62a and 62b. Moreover, it is assumed that in FIG. 6(a), the erasure block 61 has been written with data A and B, and the erasure block 62 has been erased.

In the flash memory that is in the state shown in FIG. 6(a), the procedure for rewriting only the data B is as follows. First, data B(NEW) to be rewritten is written to the erasure block 62 that has been erased (see FIG. 6(b)). Next, the data A that has been written in the erasure block 61 is moved to the erasure block 62 (see FIG. 6(c)). Then, the erasure block 61 is erased (see FIG. 6(d)).

A series of these operations is referred to as "involved saving". When the involved saving occurs, writing is performed twice, and thus the writing rate decreases. Furthermore, the physical location in which data is recorded is updated each time, so that, in addition to the operations described above, a table showing the correlation between logical addresses and physical addresses has to be updated each time that the involved saving occurs.

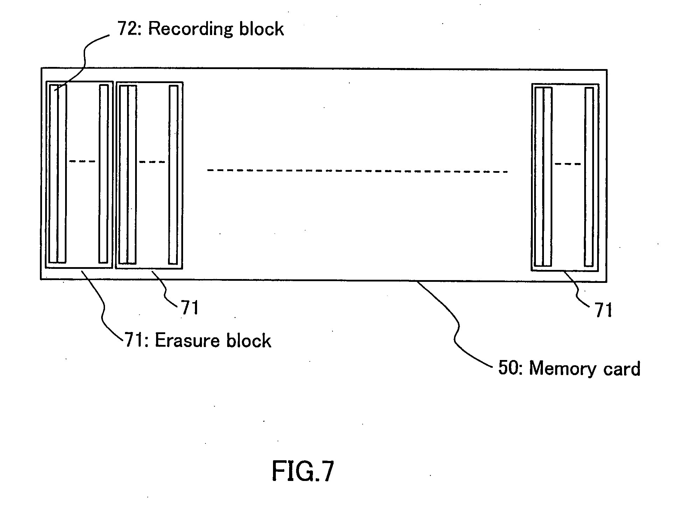

Now, FIG. 7 shows a conceptual diagram of the memory cards that are used in the present embodiment.

In the memory cards 50 to 53 that are used in the present embodiment, one erasure block 71 is constituted by 32 recording blocks 72, as shown in FIG. 7 (only the memory card 50 is illustrated in FIG. 7). The size of each recording block 71 is 512 B, and the size of the erasure block 71 is 16 KB.

For example, when the recording blocks 72 are provided with consecutive numbers such as #0, #1, #2 ..., recording blocks #0 to #31 are one erasure block.

When the erasure blocks 71 also are provided with consecutive numbers, the number R(n) of a recording block 72 and the number E(n) of an erasure block 71 satisfy the following relationship:

$$E(n) = R(n) / 32$$

Since the erasure block 71 is constituted by a plurality of recording blocks 72, for example, when contiguous recording blocks are to be overwritten with 16 KB of data, there are two types of patterns of procedures: (1) the case where the 16 KB of data is recorded into one erasure block (e.g., recording blocks #0 to #31), and (2) the case where the 16 KB of data is recorded such that it extends over two erasure blocks (e.g., recording blocks #1 to #32).

In the case of the pattern (1), the recording operation is performed in the following three steps (a1) to (a3):

(a1) detecting an erasure block in which data has not been recorded,
(a2) recording the 16 KB of data that is to be updated into the erasure block that was detected in the step (a1), and
(a3) erasing the pre-updated data.

On the other hand, in the case of the pattern (2), the recording operation is performed in the following eight steps (b1) to (b8):

(b1) detecting an erasure block in which data has not been recorded;
(b2) recording corresponding part of the data into the recording blocks #1 to #31 of the erasure block that was detected in the step (b1);
(b3) saving data that corresponds to the recording block #0 into the erasure block that was detected in the step (b1);
(b4) erasing the erasure block in which the pre-updated recording blocks #0 to #31 were recorded;
(b5) detecting an erasure block in which data has not been recorded;
(b6) recording a part of the data that corresponds to the recording block #32 into the erasure block that was detected in the step (b5);
(b7) saving data that corresponds to recording blocks #33 to #63 into the erasure block that was detected in the step (b5); and
(b8) erasing the erasure block in which the pre-updated recording blocks #32 to #63 were recorded.

When updating data as described above, in order for a memory card to exhibit its transfer performance, it is important to perform recording giving consideration to the alignment of erasure blocks in the memory card.

Therefore, in the present embodiment, data is transferred from the camera portion 1 to the recording portion 2 in units of 64 KB, and the recording portion 2 divides the 64 KB data into blocks of 16 KB that correspond to the erasure blocks in each memory card, and records them.

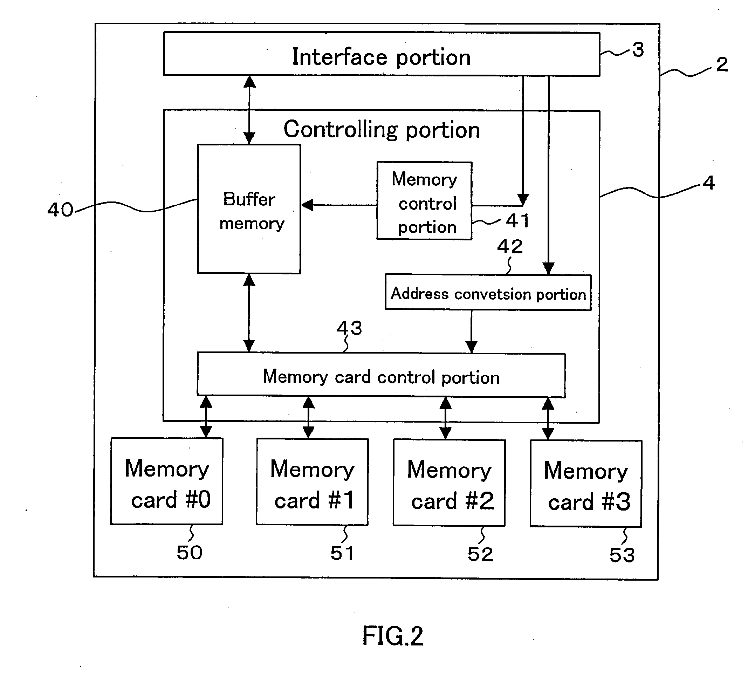

FIG. 2 is a block diagram showing an example of an internal configuration of the recording portion 2 in FIG. 1. In FIG. 2, the description of the blocks that are provided with the same numerals as in FIG. 1 will be omitted. In FIG. 2, numeral 40 indicates a buffer memory for temporarily storing digital data that is transferred from the interface portion 3, and numeral 41 indicates a memory control portion for controlling the buffer memory 40. The memory control portion 40 converts digital data that was input in series at a transfer rate of 16 MB/sec into four strings of digital data having a transfer rate of 4 MB/sec. Numeral 42 indicates an address conversion portion for converting a sector number of a sector that was specified as an object to be recorded or reproduced via the interface portion 3 into a memory card number that is provided for one of the four memory cards 50 to 53 and an address within that memory card. Numeral 43 indicates a memory card control portion for controlling the four memory cards 50 to 53 according to the internal logical sector number that was output from the address conversion portion 42.

Operations of the recording portion 2 having the above-described configuration will be described in more detail.

In the present embodiment, an interface that conforms to the PC card is used as the interface portion 3. The interface portion 3 receives a command set that conforms to the ATA standard and digital data from the camera portion 1. In general, digital data is transferred between a recording device and a host in units of an integer multiple of a sector constituted by a 512-byte block. In the present embodiment, $32 \times 4$ sectors are packed into one group, and digital data is transferred in units of 64 KB (512 B $\times$ 32 $\times$ 4). In this manner, a block that is a group of a plurality of sectors is referred to as a "cluster", and in a file system (e.g., FAT), files are managed in units of clusters. In the present embodiment, files are managed in units of clusters having a size of 16 KB, and data is transferred in units of four clusters (64 KB).

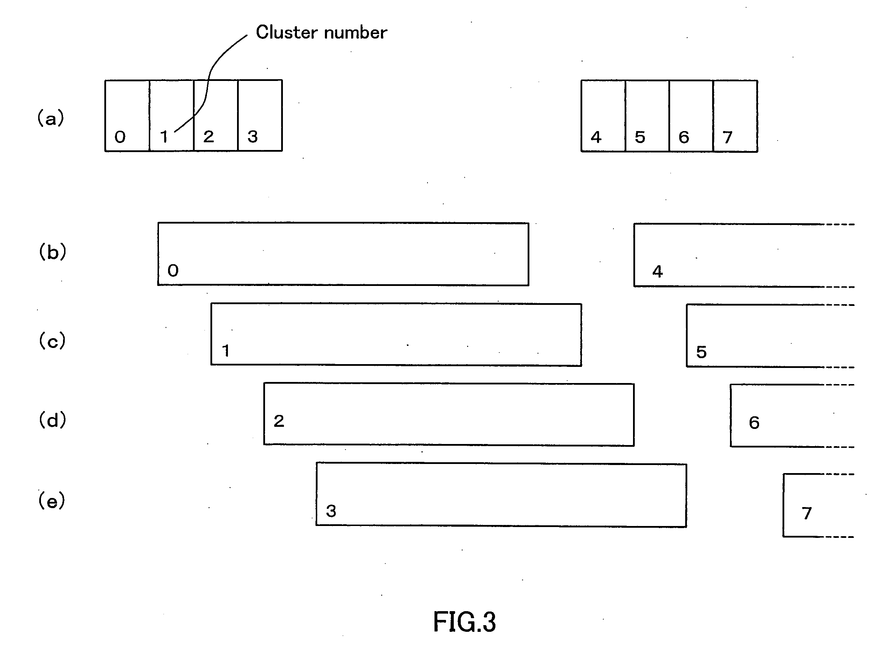

FIG. 3 shows a timing of cluster input and output of the controlling portion 4 according to the present embodiment.

In FIG. 3, (a) is a timing chart of clusters that are transferred to the interface portion 3, and numerals indicate the cluster numbers. The number of bytes that are transferred in each cluster is 16 K bytes, and every four bytes are transferred in synchronization with a 66 MHz clock.

According to the DVCPRO50 standard, the transfer rate is 9 MB/sec, so that the occupancy of data transferred is 9/(66 x 4). In the present embodiment, data is buffered in a memory (not shown) in the signal processing portion 10 of the camera portion 1 and then transferred to the recording portion 2 consecutively in units of four clusters (16KB x 4).

In FIG. 3, (b) is a timing chart of clusters that are transferred to the memory card 0, (c) is a timing chart of clusters that are transferred to the memory card 1, (d) is a timing chart of clusters that are transferred to the memory card 2, and (e) is a timing chart of clusters that are transferred to the memory card 3. Numerals shown in (b), (c), (d), and (e) correspond to the cluster numbers shown in (a).

The clusters that have been transferred to the interface portion 3 with the timing shown in (a) in FIG. 3 such that two bytes are transferred at a rate of 66 MHz are transferred to the buffer memory 40 in the controlling portion 4, interleaved by the memory control portion 41 in units of sectors, as shown in (b), (c), (d), and (e) in FIG. 3, and then transferred to the memory card control portion 43.

In the address conversion portion 42, a cluster number that was specified via the interface portion 3 is converted into a memory card number of one of the memory cards 50 to 53 and an internal cluster number that is contained in the memory card.

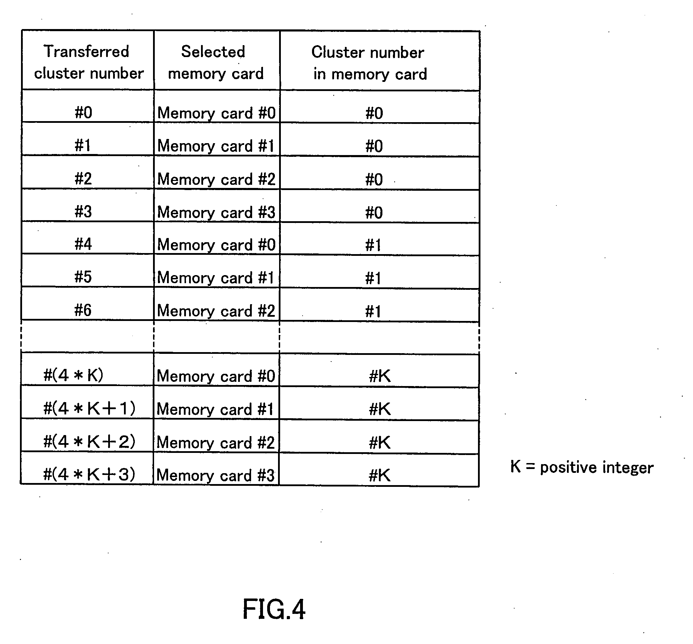

FIG. 4 is a conversion table of the cluster numbers that is used by the address conversion portion 42. The cluster number that was transferred to the interface portion 3 (transferred cluster number in FIG. 4) is divided by 4, and the remainder serves as the memory card number. That is, the following expression is possible:

$$\text{Memory card number = transferred cluster number \% 4}$$

It should be noted that "%" is the remainder operator.

Moreover, the integral part of the quotient obtained by dividing the transferred cluster number by 4 serves as the cluster number in the memory card. That is, the following expression is possible:

$$\text{Cluster number in memory card = transferred cluster number / 4}$$

It should be noted that "/" is here the operator for obtaining the integral part of the quotient.

The memory card control portion 7 transfers the clusters that have been made parallel by the buffer memory 40 as described above to the four memory cards 50 to 53 according to the cluster numbers obtained through conversion by the address conversion portion 42, and records the clusters to the four memory cards in parallel.

In this manner, by dividing data that has been transferred from the camera portion 1 into blocks having the size of the erasure block in the memory cards 50 to 53 and recording them to the memory cards 50 to 53 in parallel, it is possible to operate the four memory cards in parallel without impairing the transfer performance of the memory cards having a recording rate of 4 MB/sec, and thus a maximum recording rate of 16 MB/sec can be achieved.

In the foregoing, the example in which data that has been transferred via the interface portion 3 is divided into blocks having the size of the erasure block and recorded to the memory cards was described. Hereinafter, an example in which data is divided into blocks having the size of a recording block and recorded will be described as a modified example of the present embodiment.

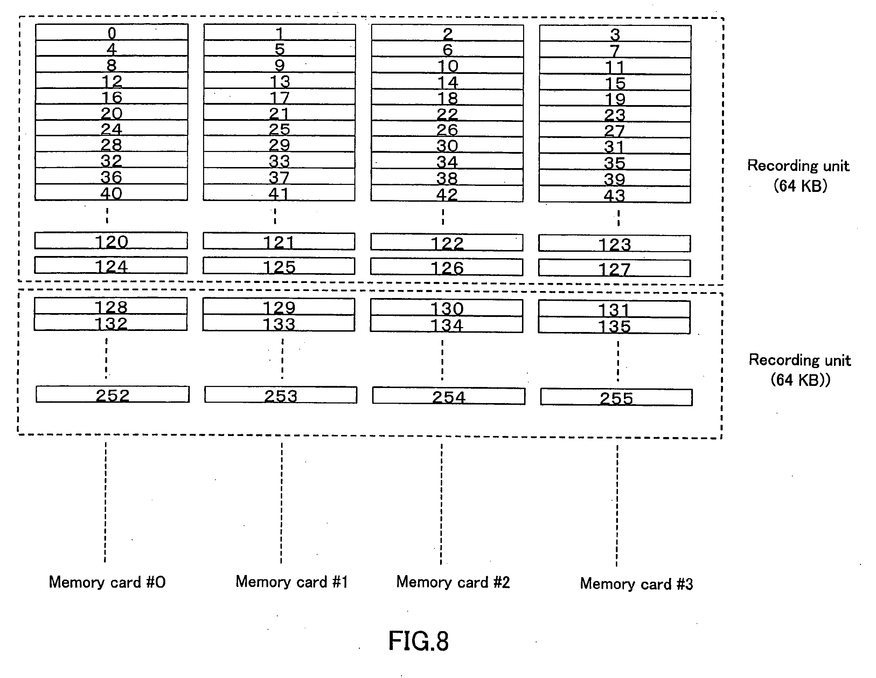

FIG. 8 is an explanatory diagram of the modified example of the present embodiment. As shown in FIG. 8, in this example, data that has been transferred via the interface portion 3 is divided into blocks having the size of the recording block of the flash memory and recorded to the memory cards.

That is to say, data that has been transferred via the interface portion 3 is striped across the memory cards for each recording block (512 B) of the flash memory. It should be noted that, from the camera portion 1 to the recording

EP 1 605 694 A1

portion 2, image data is transferred in units of blocks having a size (64 KB) that is four times as large as that of the erasure block.

In this example, the erasure blocks of the flash memories are equivalent to the data blocks transferred from the camera portion 1, and consequently, saving does not occur, and the data that has been transferred from the camera portion 1 can be recorded at a high speed.

Moreover, in this example, in addition to the advantage that recording can be performed at a high speed, during reading, data can be read at a high speed in relatively small blocks because the data can be read from the memory cards in parallel in units of four or more times as large as a recording block.

It should be noted that when data is divided into the four memory cards in units of blocks having a size (e.g., 128 B) that is smaller than that of a recording block (512 B), and when 512 B of data is recorded, four recording blocks are to be rewritten. Therefore, the number of rewritings increases to four times as high as that in the case where data is divided into the four memory cards in units of blocks of 512 B, which is clearly disadvantageous in flash memories that are limited in the number of rewritings.

Furthermore, when a plurality of flash memories are contained in a memory card and the N (N is an integer of 2 or more) flash memories are operated in parallel inside the memory card, recording of course can be performed at a high speed by performing the recording operation in units of blocks that correspond to N multiples of the erasure block of the flash memory.

In the reproducing operation of the present embodiment; the data flow is the reverse of that in the recording operation.

First, a read cluster number is input to the interface portion 3. This read cluster number is converted by the address conversion portion 42 into the memory card number of the memory card to be read and the cluster number in the memory card. The memory card control portion 43 reads digital data in the relevant cluster from the predetermined memory card according to the memory card number and the cluster number in the memory card. The digital data that was read from the memory card is stored temporarily in the buffer memory 40 and then output via the interface portion 3.

Since a cluster number that is input to the interface portion 3 is input in the form of a cluster number of a first cluster to be read and the number of clusters to be read consecutively, the memory card control portion 43 can read clusters from the four memory cards in parallel and transfer them to the buffer memory 40, and thus the speed of reading can be increased.

The clusters that were read out are input to the signal processing portion 11 in the camera portion 1. The signal processing portion 11 restores the compressed data to video signals and outputs them to a monitor, for example.

Although the reproducing operation can be executed in the camera recorder, if the recording portion 2 is implemented in the form of a PC card, then the recording portion 2 can be removed from the camera recorder and inserted into a personal computer to reproduce the picked-up video signals.

When the recording portion 2 is implemented as a PC card as mentioned above, then a new workflow for broadcasting stations can be provided as below: a mobile personal computer and the camera recorder are carried to the field where images are picked up; the recording portion 2, in the form of a PC card, is removed from the camera recorder and inserted into the mobile personal computer; and the picked-up image data is edited on the mobile personal computer and then transmitted to a broadcasting center via communication means such as the Internet.

It should be noted that the transfer rate to a PC does not have to be equal to the recording rate of video signals, and it is of course sufficient that uploading is performed at the highest speed.

Moreover, the recording portion 2 in the form of a PC card does not have a mechanically movable structure, and thus, as an external recording medium for a PC, it is much more shock-resistant than HDDs and can be utilized efficiently as a mobile disk. Furthermore, besides the form of a card, the recording portion 2 also can be made in the form of a stick.

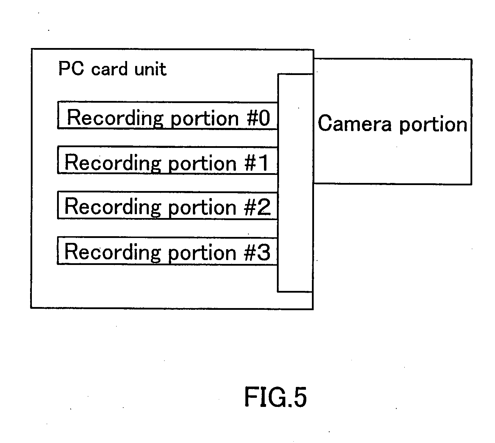

FIG. 5 shows a conceptual diagram of a camera recorder in which the recording portion 2 is configured in the form of a PC card and a plurality of cards are inserted. As shown in FIG. 5, when the camera recorder is configured such that a plurality of recording portions 2 can be inserted, video signals can be recorded for a longer period of time.

Moreover, when two recording portions 2 are mounted on the camera recorder, video signals can be recorded continuously without limitation by replacing one of the recording portions that is not in operation.

In the present embodiment, the configuration in which four memory cards are provided was described as an example, but of course the present invention is not limited to this example, and it is also possible to provide N (N is a natural number) memory cards and control the N memory cards according to the memory card numbers corresponding to those memory cards and the internal logical sector numbers from the address conversion portion.

As described above, by configuring a camera recorder with a recording portion for operating a plurality of memory cards in parallel and a camera portion, video signals having a high rate can be recorded and reproduced.

Moreover, transfer performance can be improved by dividing data into blocks of a predetermined unit size, the size of which is set in accordance with the characteristics of the memory cards that constitute the recording portion, and recording the blocks in association with each memory card, and by providing control based on the recording blocks and erasure blocks of the memory cards.

Moreover, an increase in the number of rewritings can be prevented by dividing data into blocks having a size that is N (N is a natural number) times as large as the recording block of the flash memory and recording the blocks in association with each memory card.

Moreover, an increase in the number of erasings due to the use of a plurality of memory cards can be prevented by dividing data into blocks having a size that is N (N is a natural number) times as large as the erasure block of the flash memory and recording the blocks in association with each memory card. Consequently, recording can be performed at a high speed.

Furthermore, by associating the data to the memory cards in units of the recording blocks of the flash memory and transferring the data via an interface portion in blocks having a size that is N (N is a natural number) times as large as (the erasure block of the flash memory) $\times$ (the number of memory cards constituting the recording portion) to record them, data can be transferred at a high speed in small blocks during reading.

Industrial Applicability

The present invention is useful as a camera recorder that is capable of recording and reproducing a large volume of image data at a high speed and a data recording medium that is capable of, for example, transferring the image data at a high speed to an information processing device such as a personal computer.

**Claims**

1. A camera recorder comprising a camera portion and a recording portion for recording image data picked up by the camera portion,
   wherein the recording portion comprises:

   an interface portion for receiving the image data from the camera portion,
   a plurality of memory cards for storing the image data, and
   a controlling portion for controlling writing of the image data to the memory cards,

   wherein the memory cards are constituted by a flash memory, and
   wherein the controlling portion divides the image data received from the camera portion via the interface portion into blocks having a data size that is an integral multiple of a recording block of the flash memory, and records the image data to the plurality of memory cards in parallel.

2. The camera recorder according to claim 1, wherein the controlling portion divides the image data received from the camera portion via the interface portion into blocks having a data size that is an integral multiple of an erasure block of the flash memory, and records the blocks in association with each memory card.

3. The camera recorder according to claim 1 or 2, wherein the controlling portion stripes the image data that is divided into blocks across the plurality of memory cards to record the image data.

4. The camera recorder according any one of claims 1 to 3, wherein data is transferred from the camera portion to the interface portion in units of blocks having a size that is an integral multiple of (a data size of the erasure block of the flash memory) $\times$ (the number of memory cards constituting the recording portion), and
   the controlling portion records the data to the plurality of memory cards in units of the recording block of the flash memory.

5. The camera recorder according to any one of claims 1 to 4,
   wherein the camera recorder comprises a plurality of units of the recording portion.

6. The camera recorder according to any one of claims 1 to 4,
   wherein the recording portion is removable.

7. The camera recorder according to claim 6, wherein the recording portion is in the form of a card or a stick that is compatible with an external information processing device.

8. A camera recorder comprising a camera portion and a recording portion for recording image data picked up by the camera portion,

wherein the recording portion comprises:

an interface portion for receiving the image data from the camera portion,
a plurality of memory cards for storing the image data, and
a controlling portion for controlling reading of the image data from the memory cards,

wherein the memory cards are constituted by a flash memory, and
wherein the controlling portion reads the image data that is divided into blocks having a data size that is an integral multiple of a recording block of the flash memory from the plurality of memory cards, in parallel.

9. The camera recorder according to claim 8, wherein the camera recorder comprises a plurality of units of the recording portion.

10. The camera recorder according to claim 8 or 9, wherein the recording portion is removable.

11. The camera recorder according to claim 10, wherein the recording portion is in the form of a card or a stick that is compatible with an external information processing device.

12. A data recording medium comprising,
an interface portion for receiving image data,
a plurality of memory cards for storing the image data, and
a controlling portion for controlling writing of the image data to the memory cards,
wherein the memory cards are constituted by a flash memory, and
wherein the controlling portion divides the image data received via the interface portion into blocks having a data size that is an integral multiple of a recording block of the flash memory, and records the image data in the plurality of memory cards in parallel.

13. The data recording medium according to claim 12, wherein the controlling portion divides the image data received via the interface portion into blocks having a data size that is an integral multiple of an erasure block of the flash memory, and records the blocks in association with each memory card.

14. The data recording medium according to claim 12 or 13, wherein the controlling portion stripes the image data that is divided into blocks across the plurality of memory cards to record the image data.

15. The data recording medium according to any one of claims 12 to 14, wherein the interface portion receives the image data in units of data blocks having a size that is an integral multiple of (a data size of the erasure block of the flash memory) $\times$ (the number of memory cards constituting the recording portion), and
the controlling portion records the image data to the plurality of memory cards in units of the recording block of the flash memory.

16. The data recording medium according to any one of claims 12 to 15, wherein the data recording medium is in the form of a card or a stick that is compatible with a plurality of types of information processing devices.

EP 1 605 694 A1

## Camera portion 1

### Image Pickup portion 10

### Signal processing portion 11

## Recording portion 2

### Interface portion 3

### Controlling portion 4

### Memory card #0 — 50

### Memory card #1 — 51

### Memory card #2 — 52

### Memory card #3 — 53

FIG.1

FIG.2

Cluster number

(a)

| 0 | 1 | 2 | 3 |

| 4 | 5 | 6 | 7 |

(b)

0

4

(c)

1

5

(d)

2

6

(e)

3

7

FIG.3

| Transferred cluster number | Selected memory card | Cluster number in memory card |
|---|---|---|
| #0 | Memory card #0 | #0 |
| #1 | Memory card #1 | #0 |
| #2 | Memory card #2 | #0 |
| #3 | Memory card #3 | #0 |
| #4 | Memory card #0 | #1 |
| #5 | Memory card #1 | #1 |
| #6 | Memory card #2 | #1 |
| | | |
| #(4 * K) | Memory card #0 | #K |
| #(4 * K+1) | Memory card #1 | #K |
| #(4 * K+2) | Memory card #2 | #K |
| #(4 * K+3) | Memory card #3 | #K |

K = positive integer

FIG.4

EP 1 605 694 A1

PC card unit

Recording portion #0
Recording portion #1
Recording portion #2
Recording portion #3

Camera portion

FIG.5

FIG.6

EP 1 605 694 A1

EP 1 605 694 A1

72: Recording block

71

71: Erasure block

50: Memory card

71

FIG.7

| 0 | 1 | 2 | 3 |
|---|---|---|---|
| 4 | 5 | 6 | 7 |
| 8 | 9 | 10 | 11 |
| 12 | 13 | 14 | 15 |
| 16 | 17 | 18 | 19 |
| 20 | 21 | 22 | 23 |
| 24 | 25 | 26 | 27 |
| 28 | 29 | 30 | 31 |
| 32 | 33 | 34 | 35 |
| 36 | 37 | 38 | 39 |
| 40 | 41 | 42 | 43 |
| ⋮ | ⋮ | ⋮ | ⋮ |
| 120 | 121 | 122 | 123 |
| 124 | 125 | 126 | 127 |

Recording unit (64 KB)

| 128 | 129 | 130 | 131 |
|---|---|---|---|
| 132 | 133 | 134 | 135 |
| ⋮ | ⋮ | ⋮ | ⋮ |
| 252 | 253 | 254 | 255 |

Recording unit (64 KB))

Memory card #0   Memory card #1   Memory card #2   Memory card #3

FIG.8

## INTERNATIONAL SEARCH REPORT

International application No.

PCT/JP03/15206

A. CLASSIFICATION OF SUBJECT MATTER
Int.Cl⁷ H04N5/907, 5/91

According to International Patent Classification (IPC) or to both national classification and IPC

B. FIELDS SEARCHED

Minimum documentation searched (classification system followed by classification symbols)
Int.Cl⁷ H04N5/76-5/956, 5/225-5/243

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 7-135589 A (Canon Inc.),<br>23 May, 1995 (23.05.95),<br>Full text; Figs. 1 to 3<br>(Family: none) | 1–16 |
| Y | JP 2002-33946 A (Fuji Photo Film Co., Ltd.),<br>31 January, 2002 (31.01.02),<br>Full text; Figs. 1 to 9<br>(Family: none) | 1–16 |
| Y | JP 2002-55878 A (Sony Corp.),<br>20 February, 2002 (20.02.02),<br>Full text; Figs. 1 to 11<br>(Family: none) | 1–16 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>02 March, 2004 (02.03.04) | Date of mailing of the international search report<br>16 March, 2004 (16.03.04) |
|---|---|
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP03/15206

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2002-189992 A (Sony Corp.),<br>05 July, 2002 (05.07.02),<br>Full text; Figs. 1 to 13<br>& US 2002/78297 A1 | 1-16 |
| A | JP 2000-207137 A (Kowa Co., Ltd.),<br>28 July, 2000 (28.07.00),<br>Full text; Figs. 1 to 3<br>(Family: none) | 1-16 |

Form PCT/ISA/210 (continuation of second sheet) (July 1998)